# EUROPEAN PATENT APPLICATION

(11) **EP 4 181 097 A1**
(43) Date of publication of application: **17.05.2023**
(21) Application number: 22185703.0
(22) Date of filing: 19.07.2022
(51) Int. Cl.: G08B 13/196

(54) **NON-TRANSITORY COMPUTER-READABLE RECORDING MEDIUM AND DISPLAY METHOD**

(30) Priority: 16.11.2021 JP 2021186055
(71) Applicant: FUJITSU LIMITED, Kawasaki-shi, Kanagawa 211-8588 (JP)
(72) Inventor: Tanaka, Ritsuko, Minato-ku, Tokyo, 105-7123 (JP); Ishikawa, Tomokazu, Minato-ku, Tokyo, 105-7123 (JP)
(74) Representative: Hoffmann Eitle

(57) **Abstract**

Provided is a non-transitory computer-readable recording medium storing a display program of a screen used to check videos captured by cameras, the display program causing a computer to execute a process, the process including analyzing each of the videos to identify a time period in which a target subject is captured in each of the videos, acquiring a reference position to be a reference for tracking the target subject, referring to a storage unit that stores information about respective positions in which the cameras are installed, and displaying display fields in order of distances between each of the cameras and the reference position, the display fields corresponding to the cameras, respectively, each of the display fields displaying information about the time period in which the target subject is captured in a video from a corresponding one of the cameras.

## Description

### FIELD

A certain aspect of embodiments described herein relates to a non-transitory computer-readable recording medium and a display method.

### BACKGROUND

Surveillance systems that install multiple cameras in the surveillance area and monitor the surveillance area using videos captured by the installed cameras have been widely used. Use of such surveillance systems allows the surveillance area to be monitored in real time. In addition, by storing videos captured by the cameras, after an incident or accident occurs, it is possible to check what actions were taken by the person targeted for tracking, retroactively.

To check the actions of the person targeted for the tracking retroactively, it is required to switch between videos from the cameras to check the actions because the camera that captures the tracking target changes one after the other. Note that the technique related to the present disclosure is also disclosed in Japanese Laid-Open Patent Publication Nos. 2018-32994 and 2011-145730 and International Publication No. 2015/166612.

### SUMMARY

Recently, technologies to recognize persons or specific objects from a video is becoming popular. Therefore, for example, it is possible to identify the time period in which a person or object is captured in the video captured by each camera and display the identified time period on a screen. In addition, it would be easier to track a person or object by sorting videos by the time period in which the person or object is captured, and display the sorted videos side by side.

However, when different persons are captured in the videos from respective cameras, and it is impossible to recognize the persons in distinction from each other, sorting and displaying videos in the order of time when the persons were captured in respective videos do not necessarily make it easier to track the tracking target.

The objective of the present disclosure is to provide a non-transitory computer-readable recording medium and a display method that can ease tracking of a tracking target using videos from cameras.

According to an aspect of the embodiments, there is provided a non-transitory computer-readable recording medium storing a display program of a screen used to check videos captured by cameras, the display program causing a computer to execute a process, the process including: analyzing each of the videos to identify a time period in which a target subject is captured in each of the videos; acquiring a reference position to be a reference for tracking the target subject; referring to a storage unit that stores information about respective positions in which the cameras are installed; and displaying display fields in order of distances between each of the cameras and the reference position, the display fields corresponding to the cameras, respectively, each of the display fields displaying information about the time period in which the target subject is captured in a video from a corresponding one of the cameras.

### BRIEF DESCRIPTION OF DRAWINGS

FIG. 1 schematically illustrates a structure of a tracking assistance system in accordance with an embodiment.
FIG. 2A illustrates a hardware configuration of a user terminal, and FIG. 2B illustrates a hardware configuration of a server.
FIG. 3 is a functional block diagram of the server.
FIG. 4 illustrates a data structure of a camera information table.
FIG. 5 illustrates a data structure of a video table.
FIG. 6 illustrates mapping results.
FIG. 7 illustrates an analysis result table.
FIG. 8 illustrates distance order information.
FIG. 9 is a flowchart (No. 1) of an exemplary process executed by the server.
FIG. 10 is a flowchart (No. 2) of the exemplary process executed by the server.
FIG. 11 illustrates an initial screen.
FIG. 12 illustrates a mapping screen.
FIG. 13 illustrates a video check screen (initial).
FIG. 14 illustrates the analysis result table after sorting.
FIG. 15 illustrates a video check screen (after sorting).
FIG. 16A and FIG. 16B are diagrams for describing advantages obtained by displaying the video check screen (after sorting).

### DESCRIPTION OF EMBODIMENTS

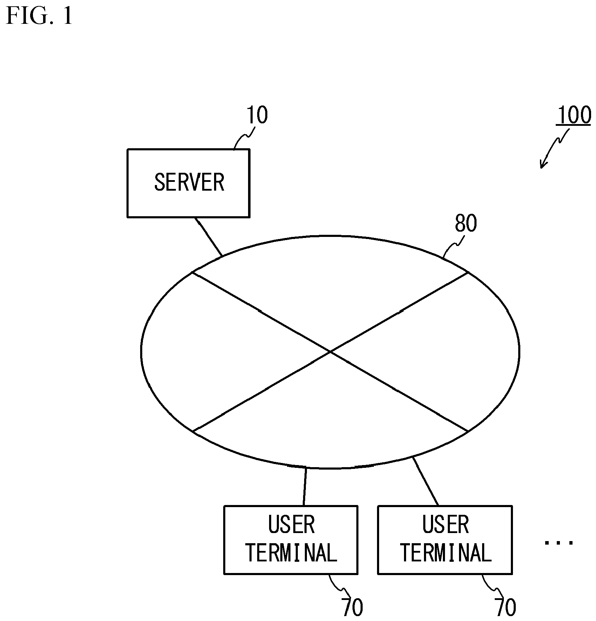

Hereinafter, a description will be given of an embodiment of a tracking assistance system with reference to FIG. 1 to FIG. 16B.

FIG. 1 schematically illustrates a structure of a tracking assistance system 100 in accordance with an exemplary embodiment. The tracking assistance system 100 illustrated in FIG. 1 is a system used by security companies and other companies to track tracking targets. Security companies determine the direction in which the tracking target has moved by checking the videos captured by surveillance cameras installed in the surveillance area (for example, in the city). Examples of the tracking target include, but are not limited to, the perpetrator who has fled the scene of an incident or accident.

The tracking assistance system 100 includes user terminals 70 and a server 10 as illustrated in FIG. 1. The user terminals 70 and the server 10 are coupled to a network 80. The network 80 may be a closed network such as a corporate local area network (LAN) or other networks, or may be an open network such as the Internet and other networks.

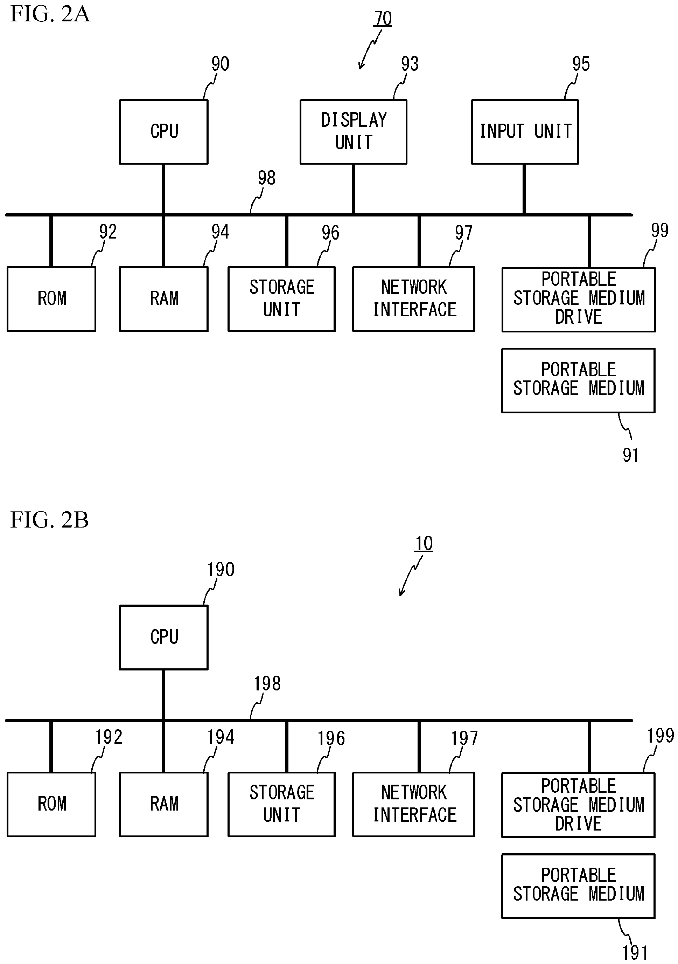

The user terminal 70 is a terminal such as a personal computer (PC) used by the person in charge of the security company who tracks the tracking target (hereinafter, referred to as a "user"). FIG. 2A illustrates a hardware configuration of the user terminal 70. As illustrated in FIG. 2A, the user terminal 70 includes a central processing unit (CPU) 90, a read only memory (ROM) 92, a random access memory (RAM) 94, a storage unit (here, a solid state drive (SSD)) 96, a network interface 97, a display unit 93, an input unit 95, a portable storage medium drive 99, and other components. Examples of the display unit 93 include, but are not limited to, a liquid crystal display. Examples of the input unit 95 include, but are not limited to, a keyboard, a mouse, and a touch panel. These components of the user terminal 70 are connected to a bus 98. In the user terminal 70, the CPU 90 executes programs stored in the ROM 92 or the storage unit 96.

The user performs operations on the screen displayed on the display unit 93 of the user terminal 70 and checks videos captured by surveillance cameras to track the tracking target. The user causes the portable storage medium drive 99 to read a portable storage medium 91 that stores video data captured by the surveillance cameras. The CPU 90 of the user terminal 70 transmits the video data that has been read to the server 10 via the network interface 97.

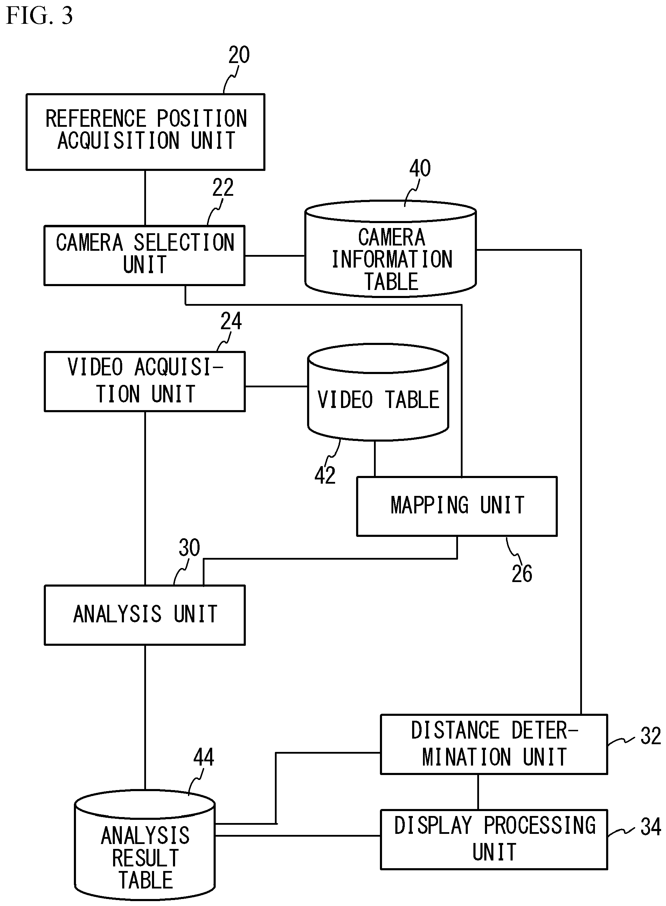

The server 10 acquires information input in the user terminal 70 and the video data transmitted from the user terminal 70, and performs various processes. FIG. 2B illustrates a hardware configuration of the server 10. As illustrated in FIG. 2B, the server 10 includes a CPU 190, a ROM 192, a RAM 194, a storage unit (an SSD or the like) 196, a network interface 197, and a portable storage medium drive 199. In the server 10, functions of each unit illustrated in FIG. 3 are implemented by the CPU 190 executing programs (including a display program) stored in the ROM 192 or the storage unit 196 or programs (including the display program) read by the portable storage medium drive 199 from a portable storage medium 191. The functions of each unit illustrated in FIG. 3 may be implemented by an integrated circuit such as an application specific integrated circuit (ASIC), a field programmable gate array (FPGA), or the like.

FIG. 3 is a functional block diagram of the server 10. As illustrated in FIG. 3, the server 10 functions as a reference position acquisition unit 20, a camera selection unit 22, a video acquisition unit 24, a mapping unit 26, an analysis unit 30, a distance determination unit 32, and a display processing unit 34 by the execution of the program by the CPU 190.

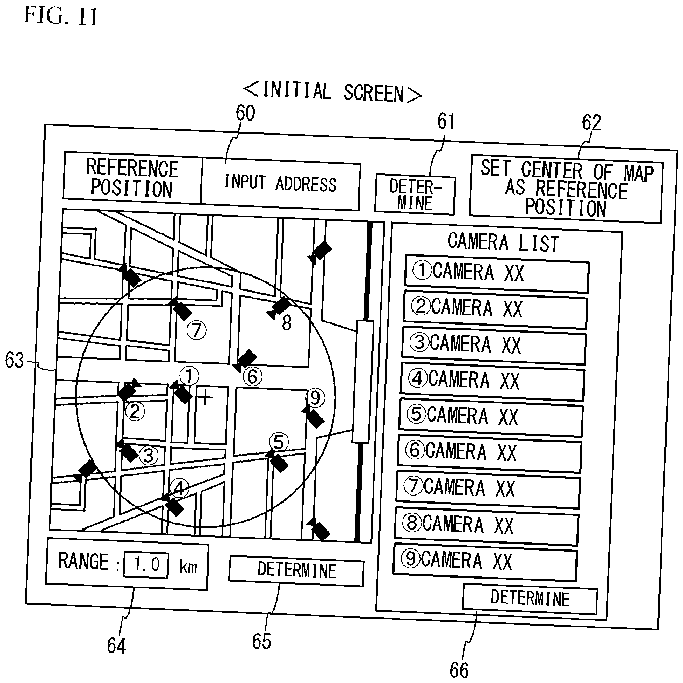

The reference position acquisition unit 20 displays an initial screen illustrated in FIG. 11 on the display unit 93 of the user terminal 70, and acquires information about the reference position (e.g., the position where an incident or accident occurred) input by the user in the initial screen.

The camera selection unit 22 determines a predefined area based on the reference position acquired by the reference position acquisition unit 20 (e.g., an area of a circle with a predetermined radius centered on the reference position). The camera selection unit 22 refers to a camera information table 40 to extract the surveillance cameras that exist within the determined area. The camera selection unit 22 displays information about the extracted surveillance cameras in the "CAMERA LIST" field in the initial screen illustrated in FIG. 11. The user selects the surveillance cameras for which the user wants to check the video in the camera list, and presses the "DETERMINE" button. The camera selection unit 22 reports information about the selected surveillance cameras to the mapping unit 26 when the "DETERMINE" button is pressed.

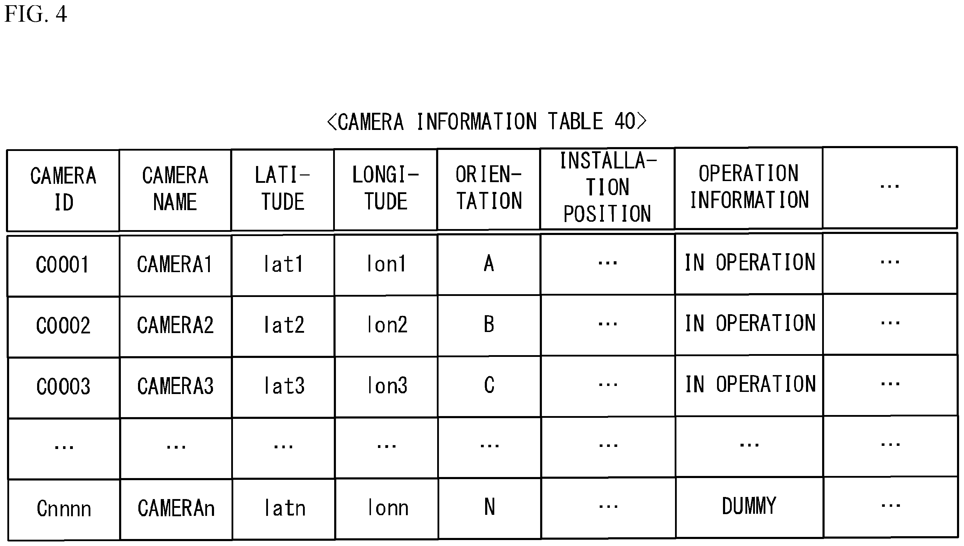

Here, the camera information table 40 is a table that stores information about each surveillance camera, and has a table structure illustrated in FIG. 4. Specifically, the camera information table 40 has items such as "CAMERA ID", "CAMERA NAME", "LATITUDE", "LONGITUDE", "ORIENTATION", "INSTALLATION POSITION", "OPERATION INFORMATION", and the like. The "CAMERA ID" is identification information assigned to each surveillance camera, and the "CAMERANAME" is the name of each surveillance camera. The "LATITUDE" and "LONGITUDE" are information indicating the position of each surveillance camera, and the "ORIENTATION" is information indicating which direction each surveillance camera is headed in. The "INSTALLATION POSITION" is information indicating the position (the address) where each surveillance camera is installed, and the "OPERATION INFORMATION" is information indicating whether each surveillance camera is in operation or under suspension, or is a dummy camera. The camera selection unit 22 extracts the information about the surveillance cameras selected by the user from the camera information table 40, and reports the extracted information to the mapping unit 26.

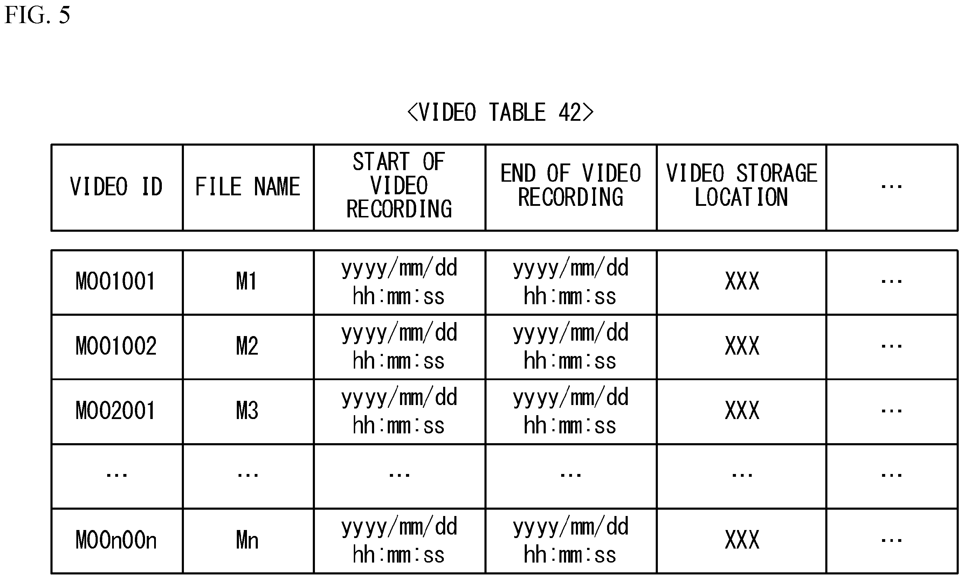

The video acquisition unit 24 acquires, from the user terminal 70, the video data read into the user terminal 70, and stores the acquired video data in the storage unit 196. The video acquisition unit 24 stores information about the video data in a video table 42. The video table 42 is a table that stores information about the video data, and has a table structure illustrated in FIG. 5. Specifically, the video table 42 includes items such as "VIDEO ID", "FILE NAME", "START OF VIDEO RECORDING", "END OF VIDEO RECORDING", and "VIDEO STORAGE LOCATION". The "VIDEO ID" is identification information assigned to each piece of video data, and the "FILE NAME" is the name of the file of each piece of video data. The "START OF VIDEO RECORDING" indicates the year, the month, the day, the hour, the minute, and the second of the start of the video recording of each piece of video data, and the "END DATE OF VIDEO RECORDING" indicates the year, the month, the day, the hour, the minute, and the second of the end of the video recording of each piece of video data. The "VIDEO STORAGE LOCATION" is information indicating where the video data is stored in the storage unit 196. In the video table 42, information (error information) indicating the degree to which the time of each surveillance camera is off may be managed.

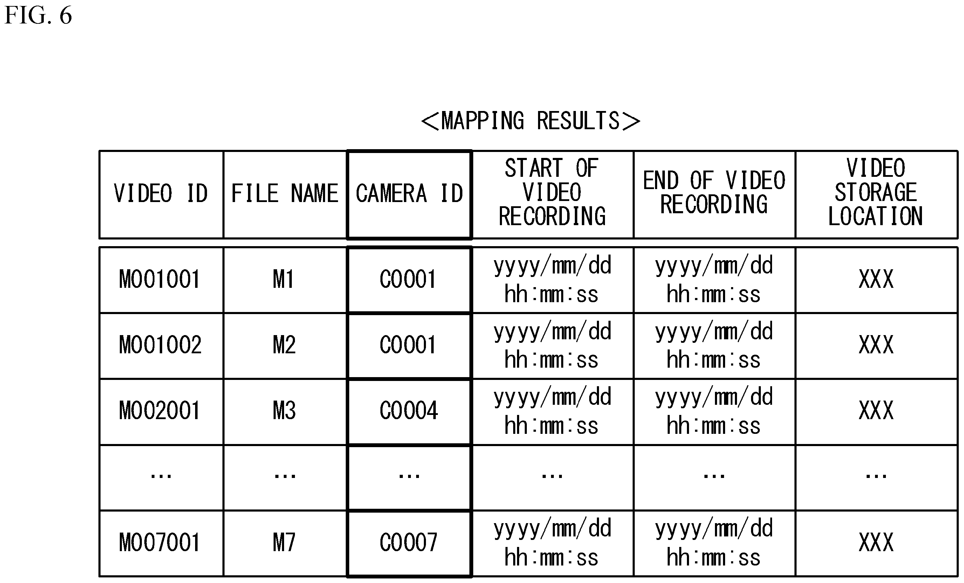

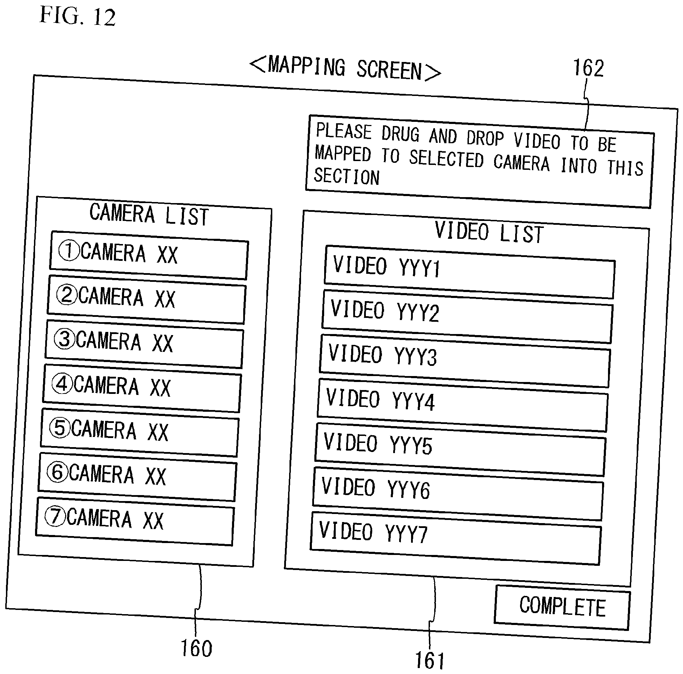

The mapping unit 26 displays a mapping screen (see FIG. 12) that displays information about the cameras reported from the camera selection unit 22 and the information about the video data acquired by the video acquisition unit 24, on the display unit 93 of the user terminal 70. The mapping unit 26 also performs the process for mapping the surveillance camera to the video data according to the operation by the user in the mapping screen, and reports the mapping results (FIG. 6) to the analysis unit 30. The mapping results are data in which the camera ID is mapped to each piece of video data as illustrated in FIG. 6.

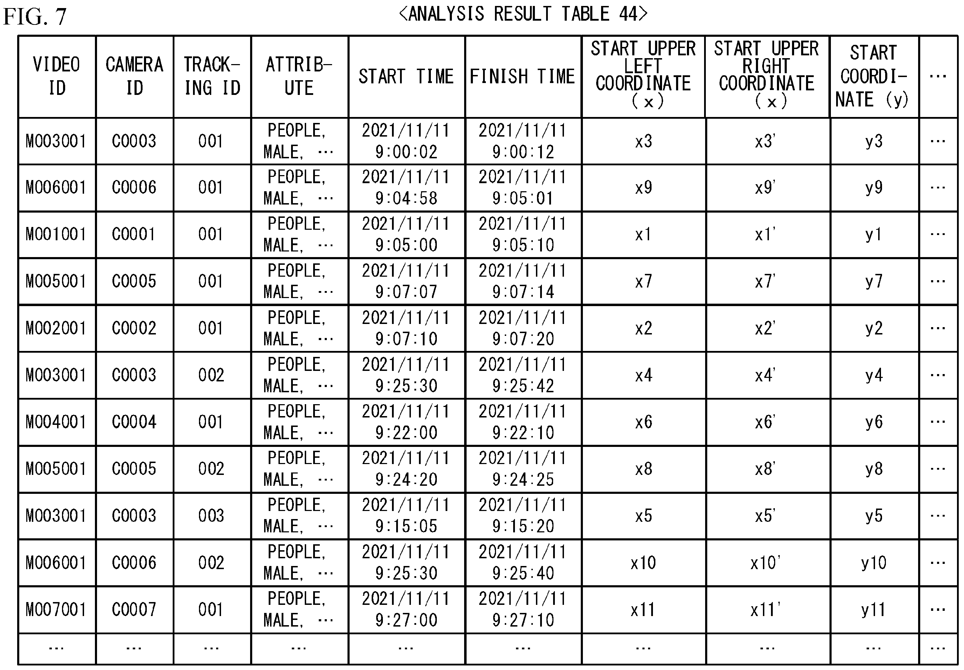

The analysis unit 30 analyzes the video data stored in the storage unit 196 to identify the time period in which people or objects are captured. The analysis unit 30 has a function of recognizing people (males, females, and the like) and objects (bicycles, cars, motorcycles, skateboards, and the like) from the video data. The analysis results by the analysis unit 30 are stored in an analysis result table 44 illustrated in FIG. 7. The analysis result table 44 includes items such as "VIDEO ID", "CAMERA ID", "TRACKING ID", "ATTRIBUTE", "START TIME", "FINISH TIME", "START UPPER LEFT COORDINATE (x)", "START UPPER RIGHT COORDINATE (x)", "START COORDINATE (y)", and the like as illustrated in FIG. 7. The "TRACKING ID" is identification information assigned to each of subjects (people and objects) recognized as different subjects in the video captured by the same surveillance camera. For example, when a person is recognized in one piece of video data, the analysis unit 30 determines that the recognized person is the same person as long as the recognized person is present within the angle of view. The "ATTRIBUTE" is information indicating the attributes of people and objects recognized by the analysis unit 30. The "START TIME" and the "FINISH TIME" are information indicating the time period in which the person or object identified by the same tracking ID is present within the angle of view. The "START UPPER LEFT COORDINATE (x)", the "START UPPER RIGHT COORDINATE (x)", and the "START COORDINATE (y)" are positional information in the angle of view, used to clip the image of the person or obj ect.

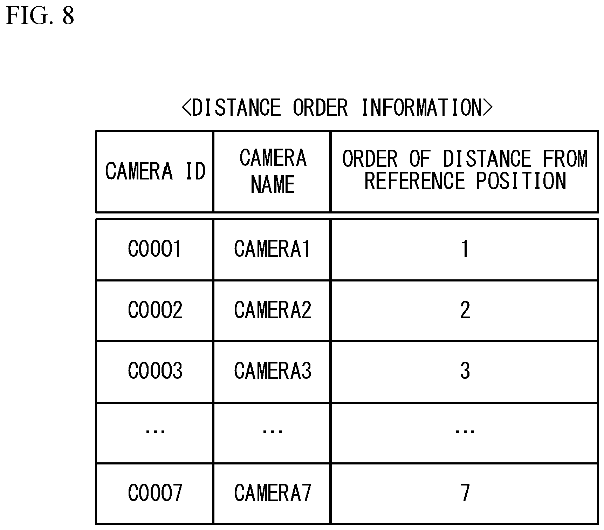

Referring back to FIG. 3, the distance determination unit 32 refers to the camera information table 40 to determine the distance between each of the surveillance cameras recorded in the analysis result table 44 and the reference position. The distance determination unit 32 ranks the surveillance cameras in the order of the determined distance from shortest to longest, and reports the distance order information illustrated in FIG. 8 to the display processing unit 34. In the present embodiment, the distance from the reference position is the straight-line distance. However, this does not intend to suggest any limitation, and the distance from the reference position may be the shortest distance from the reference position along the road (i.e., the path).

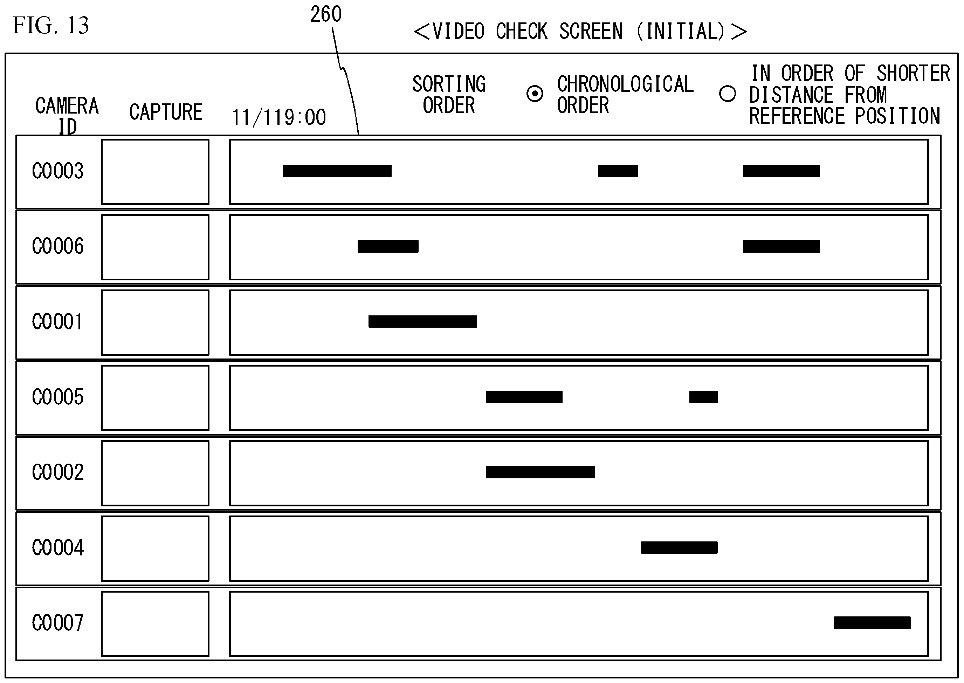

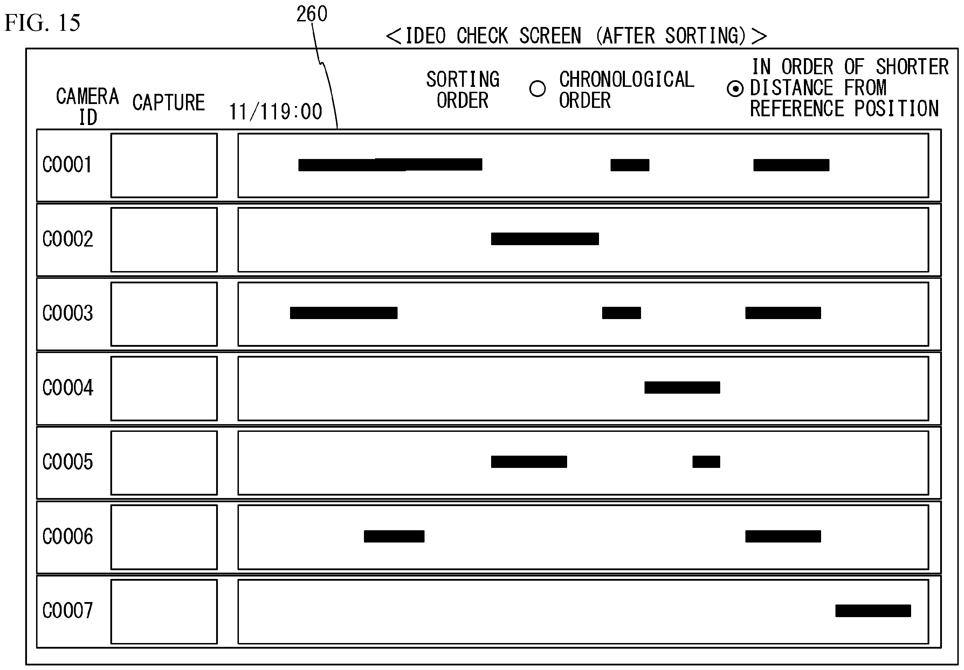

The display processing unit 34 refers to the analysis result table 44 to display a video check screen illustrated in FIG. 13 and FIG. 15 on the display unit 93 of the user terminal 70. The details of the video check screen and the details of the process executed by the display processing unit 34 will be described later.

### (Process of the Server 10)

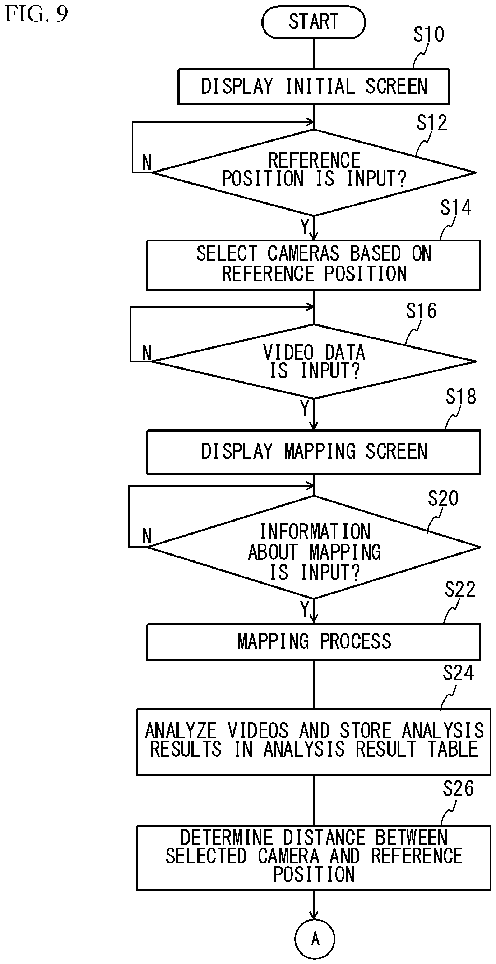

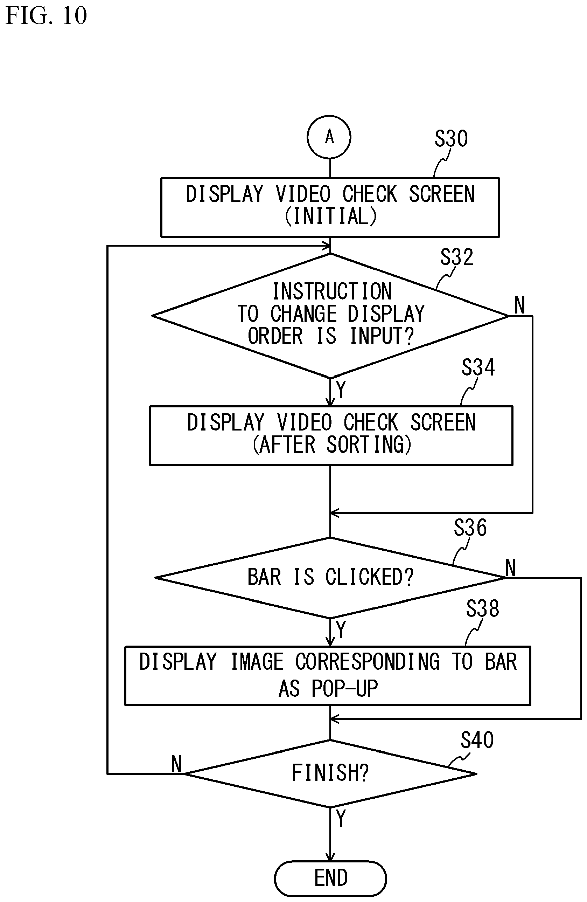

Next, a description will be given of a process executed by the server 10 along the flowcharts in FIG. 9 and FIG. 10 with reference to other figures as appropriate. The process in FIG. 9 is started when the user inputs an instruction to start the process of tracking the tracking target to the user terminal 70 and the instruction is reported to the reference position acquisition unit 20 of the server 10 from the user terminal 70.

When the process in FIG. 9 starts, the reference position acquisition unit 20 transmits the initial screen illustrated in FIG. 11 to the user terminal 70 to display the initial screen on the display unit 93 of the user terminal 70. The initial screen illustrated in FIG. 11 includes an input field 60 for the user to input the reference position, a determination button 61 for determining the information input in the input field 60, and a button 62 to be pressed when the center of the map displayed in a map display field 63 is set as the reference position. The initial screen also includes the map display field 63 for displaying a map, an input field 64 for the user to input the range (the radius of the circle centered on the reference position) for extracting the surveillance cameras, and a determination button 65 to determine the range. The initial screen further includes a camera list 66 that lists the surveillance cameras extracted by the camera selection unit 22.

Then, in step S12, the reference position acquisition unit 20 waits until the reference position is input. More specifically, the reference position acquisition unit 20 waits until the address is input into the input field 60 of the initial screen and the determination button 61 is pressed, or until the button 62 is pressed, and proceeds to step S14 when one of the buttons 61 or 62 is pressed. The user inputs the scene of an incident or accident as the reference position, for example.

In step S14, the camera selection unit 22 executes a process of selecting the surveillance cameras based on the reference position. More specifically, the camera selection unit 22 sets the circle with a radius set in the input field 64, centered on the reference position, and extracts the surveillance cameras included within the circle by referring to the camera information table 40, and displays the extracted surveillance cameras in the camera list 66. The camera selection unit 22 does not extract the surveillance camera for which "UNDER SUSPENSION" or "DUMMY" is set in the operation information of the camera information table 40. Then, the camera selection unit 22 selects the surveillance cameras selected by the user from the camera list 66 as the surveillance cameras to be used in the subsequent process. The camera selection unit 22 transmits the information about the selected surveillance cameras (for example, a camera 1 (C0001) to a camera 7 (C0007)) to the mapping unit 26. The user predicts the path through which the person (such as a perpetrator) moves from the scene of the incident, and can select only the surveillance cameras located on the path.

Next, in step S16, the video acquisition unit 24 waits until video data is input. The user causes the portable storage medium drive 99 of the user terminal 70 to read the portable storage medium 91 that stores respective pieces of the video data captured by the selected surveillance cameras. The video acquisition unit 24 proceeds to step S18 upon receiving the video data from the user terminal 70. Upon acquiring the video data, the video acquisition unit 24 stores the information about the video data in the video table 42 using the meta data associated with the video data.

In step S18, the mapping unit 26 transmits the mapping screen illustrated in FIG. 12 to the user terminal 70 to display the mapping screen on the display unit 93 of the user terminal 70. The mapping screen includes a camera list 160 that lists the camera names of the selected surveillance cameras, a video list 161 that displays the file name of each acquired piece of the video data, and a mapping region 162 as illustrated in FIG. 12. The user selects one surveillance camera in the camera list 160, and drugs and drops the video data corresponding to the selected surveillance camera to the mapping region 162 to map the surveillance camera to the video data.

Then, in step S20, the mapping unit 26 waits until the information about mapping is input. That is, the mapping unit 26 proceeds to step S22 when the user presses the "COMPLETE" button after the user repeats the mapping operation described above (the drug and drop operation to the mapping region 162).

In step S22, the mapping unit 26 performs the mapping process. As a result of the mapping process, mapping results illustrated in FIG. 6 are obtained. The mapping unit 26 reports the mapping results to the analysis unit 30.

Then, in step S24, the analysis unit 30 analyzes videos, and stores the analysis results in the analysis result table 44. In the video analysis, the analysis unit 30 performs recognition processing for subjects having attributes determined in advance (people, cars, bicycles, and the like). The analysis results are then stored in the analysis result table 44 illustrated in FIG. 7. The analysis result table 44 illustrated in FIG. 7 is a table that arranges the subjects having the attributes "people, male ..." in the order of appearance, from the top.

Then, in step S26, the distance determination unit 32 refers to the camera information table 40 to determine the distance between each surveillance camera recorded in the analysis result table 44 and the reference position. The distance determination unit 32 ranks the surveillance cameras in the order of the determined distance from shortest to longest, and reports the distance order information illustrated in FIG. 8 to the display processing unit 34.

Then, in step S30 in FIG. 10, the display processing unit 34 transmits the video check screen (initial) illustrated in FIG. 13 to the user terminal 70 to display the video check screen (initial) on the display unit 93 of the user terminal 70. The video check screen (initial) is a screen illustrated in FIG. 13, and is a screen for assisting the user to track the tracking target. It is assumed that the user inputs that the attributes of the tracking target are "people, male, ..." in advance. In the screen illustrated in FIG. 13, display fields 260 are arranged in the vertical direction. In each display field 260, a camera ID, a captured image, and a timeline are arranged in the lateral direction. The captured image is an image clipped from the video data. In the timeline, bars each indicating the time period in which the subject having the attributes "people, male, ..." to be tracked appears are displayed. That is, in the timeline, the time period in which the subject having the attributes to be tracked appears in the video is displayed in a different manner from other time periods. In the video check screen (initial) in FIG. 13, the respective display fields 260 of the surveillance cameras are arranged in the order of timing at which the subject having the attributes "people, male, ..." to be tracked first appears, from earliest to latest (in chronological order), from the top.

Then, in step S32, the display processing unit 34 determines whether an instruction to change the display order is input. When the determination in step S32 is NO, the process proceeds to step S36, and the display processing unit 34 determines whether a bar is clicked in the timeline. When the determination in step S36 is NO, the process proceeds to step S40, and it is determined whether the user performs the exit operation. When the determination in step S40 is NO, the process returns to step S32.

Thereafter, the display processing unit 34 repeats the determination in steps S32, S36, and S40. For example, when the determination in step S36 becomes YES, the display processing unit 34 proceeds to step S38.

In step S38, the display processing unit 34 displays the video corresponding to the clicked bar as pop-up. More specifically, the display processing unit 34 refers to the video table 42, and identifies, from the analysis result table 44 (FIG. 7), the video ID corresponding to the camera ID of the display field 260 in which the bar is clicked. Then, the display processing unit 34 identifies the video storage location corresponding to the identified video ID from the video table 42 (FIG. 5), acquires the video data from the identified video storage location, and displays the acquired video data as pop-up. In this case, the video data is played from the top of the time period clicked by the user. The display processing unit 34 may display the video in a manner other than pop-up. After step S38, the process proceeds to step S40.

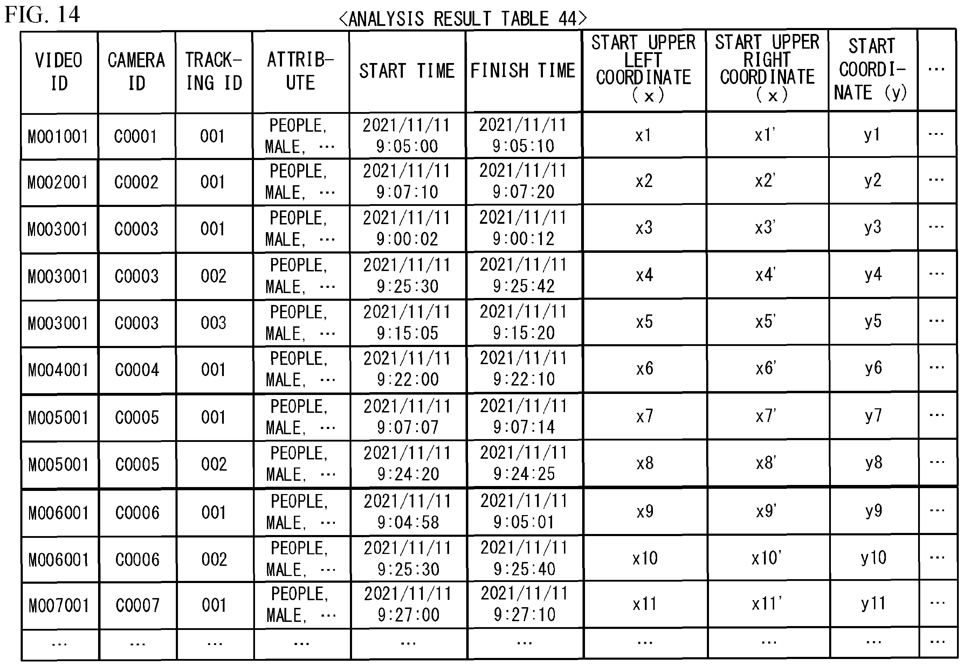

When the determination in step S32 becomes YES while steps S32, S36, and S40 are repeated, the display processing unit 34 proceeds to step S34. In step S34, the display processing unit 34 transmits the video check screen (after sorting) to the user terminal 70 to display the video check screen (after sorting) on the display unit 93 of the user terminal 70. In this case, the display processing unit 34 refers to the distance order information in FIG. 8, and sorts the analysis result table 44 in FIG. 7 in the order of distance. As a result of the sorting, the analysis result table 44 becomes the analysis result table 44 illustrated in FIG. 14. Then, the display processing unit 34 generates the video check screen (after sorting) illustrated in FIG. 15 based on the analysis result table 44 after sorting illustrated in FIG. 14. In this video check screen (after sorting), the display fields 260 are arranged in the order of the distance between the surveillance camera and the reference position from shortest to longest, from the top. After step S34, the process proceeds to step S36.

When the determination in step S32 becomes YES while the video check screen (after sorting) illustrated in FIG. 15 is being displayed, the display processing unit 34 proceeds to step S34. In step S34, the display processing unit 34 changes the video check screen (after sorting) being displayed to the video check screen (initial) illustrated in FIG. 13. In addition, when the determination in step S36 becomes YES while the video check screen (after sorting) illustrated in FIG. 15 is being displayed, the display processing unit 34 displays the video corresponding to the clicked bar as pop-up in step S38.

Thereafter, when the determination in step S40 becomes YES, all the processes in FIG. 9 and FIG. 10 are completed.

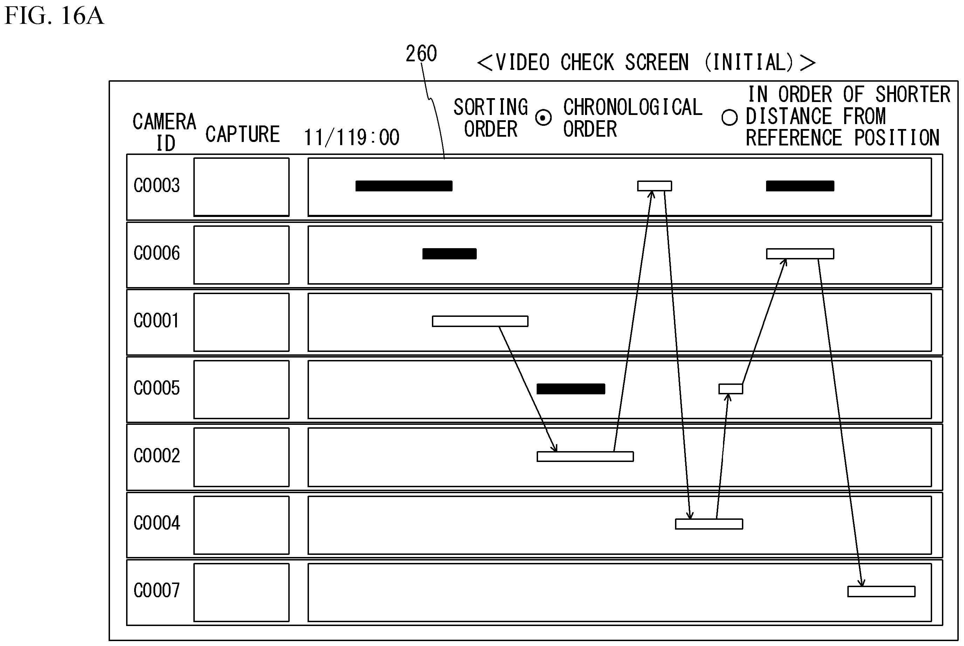

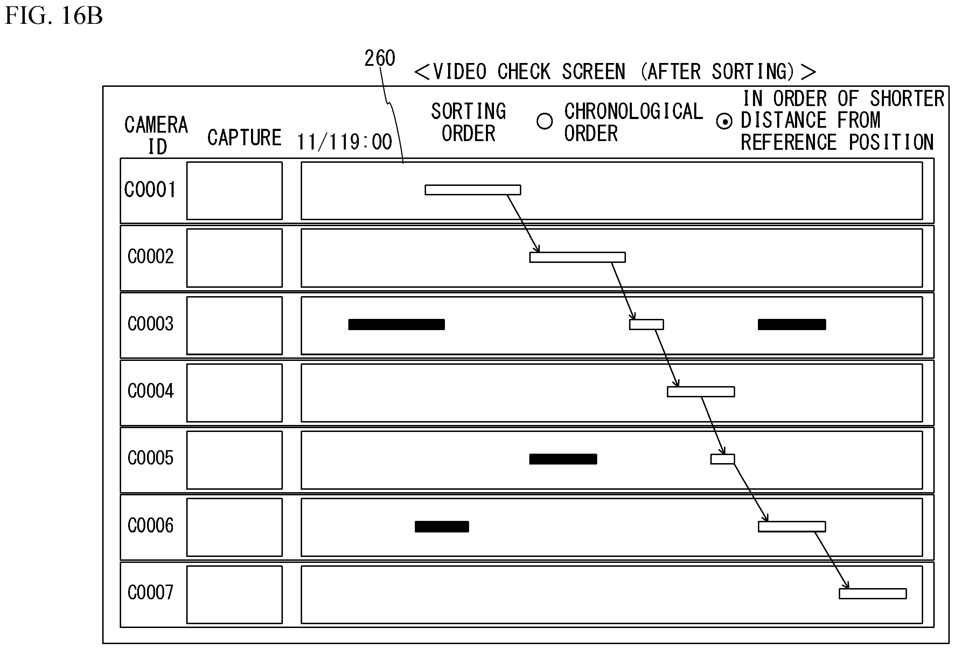

Here, a description will be given of the video check screen (initial) in FIG. 13 and the video check screen (after sorting) in FIG. 15. FIG. 16A is a diagram in which the time period in which the tracking target person appears is indicated by an open bar in the video check screen (initial) in FIG. 13, and FIG. 16B is a diagram in which the time period in which the tracking target person appears is indicated by an open bar in the video check screen (after sorting) in FIG. 15. When the tracking target person and other persons are caught in the video and the analysis unit 30 cannot recognize the persons in distinction from each other, it is difficult to check the video in which the tracking target person is caught, in the video check screen (initial) illustrated in FIG. 16A. For example, the user refers to the video check screen (initial) in FIG. 16A, and first checks the video in the time period of the first bar from the left, of the surveillance camera C00003. However, the tracking target person is not caught in the checked video. Then, the user checks the video in the time period of the first bar from the left, of the surveillance camera C00006, but the tracking target person is not caught in that video either. On the other hand, when the user checks the video in the time period of the first bar from the left, of the surveillance camera C00001, the tracking target person is caught in that video. The user further checks the video in the time period of the first bar from the left, of the surveillance camera C00005, but the tracking target person is not caught in that video. The user additionally checks the video in the time period of the first bar from the left, of the surveillance camera C00002, and the tracking target person is caught in that video. As described above, to check whether the tracking person is caught in each video, the user needs to check the video in the time period in which the tracking target person is not caught. Thus, the operating efficiency is poor.

By contrast, in the video check screen (after sorting) illustrated in FIG. 16B, the tracking target person can be tracked by checking the videos from the time period in which the tracking target person is recognized first, diagonally in the lower-right direction. More specifically, the user first checks the video in the time period of the first bar from the left, of the surveillance camera C00003, but the tracking target person is not caught in that video. Then, the user checks the video in the time period of the first bar from the left, of the surveillance camera C00001, and the tracking target person is caught in that video. In this case, the user can track the tracking target by checking the videos by clicking the bars, one after another, lined up diagonally in the lower-right direction, from the first bar from the left of the surveillance camera C00001. This allows the user to efficiently sequentially check the videos in which the tracking target person is caught.

As described above in detail, in the present embodiment, when the video check screen used to check videos captured by surveillance cameras is displayed, the analysis unit 30 analyzes each piece of video data, and identifies the time period in which a subject (people or objects) having the attributes determined in advance is captured in each piece of video data (S24). In addition, the reference position acquisition unit 20 acquires the reference position that is used as the reference for tracking the tracking target (S12: YES), and the distance determination unit 32 refers to the camera information table 40 to determine the distance between each of the surveillance cameras and the reference position (S26). The display processing unit 34 then displays the display fields 260 each displaying the identified time period, in the order of the distance between the surveillance camera corresponding to the display field 260 and the reference position from shortest to longest in the video check screen (S34). Accordingly, in the present embodiment, as described with reference to FIG. 16B, the display fields 260 can be displayed so that the tracking target is easily tracked.

In addition, in the present embodiment, the timeline is displayed in the display field 260, and the time period in which the person or object is caught is displayed in a different manner (by a bar) from other time periods in the timeline. This allows the user to easily check which time period the person or object is caught in each video.

Additionally, in the present embodiment, when a bar is clicked in one of the display fields 260, the video captured by the surveillance camera corresponding to the display field 260 in the time period corresponding to the clicked bar is displayed as pop-up. This allows the user to check the video in the time period in which the person or object is captured, by a simple operation.

Additionally, in the present embodiment, the display fields 260 are arranged in the order of the distance from the reference position from shortest to longest, from the top. This allows the user to easily track the tracking target by clicking the bars lined up from the upper left to the lower right as illustrated in FIG. 16B to check the videos.

Additionally, in the present embodiment, when the user selects the attributes of the tracking target, only the bar for the time period in which the subjects (persons or objects) having the selected attributes are recognized is displayed in the timeline. This allows the information necessary for the user to be displayed on the timeline in an easy-to-read manner.

The above embodiment has described the case that the display processing unit 34 displays the display fields 260 in the order of the distance between the surveillance camera and the reference position from shortest to longest, from the top in the video check screen (after sorting) in FIG. 15, but does not intend to suggest any limitation. For example, the display processing unit 34 may display the display fields 260 in the order of the distance between the surveillance camera and the reference position from longest to shortest. Alternatively, for example, the display fields 260 may be displayed in the lateral direction when the display fields 260 are vertically long (the timeline is displayed extending vertically). In this case, the display processing unit 34 may display the display fields 260 in the order of the distance from the reference position from shortest or from longest, from the left to the right.

In the above embodiment, the case that the surveillance area is the city is described, but this does not intend to suggest any limitation. The surveillance area may be a closed area such as, for example, the inside of a factory or the inside of a store.

In the above embodiment, the case that the server 10 has the functions illustrated in FIG. 3, but this does not intend to suggest any limitation, and the user terminal 70 may have the functions illustrated in FIG. 3.

The above-described processing functions are implemented by a computer. In this case, a program in which processing details of the functions that a processing device is to have are written is provided. The aforementioned processing functions are implemented in the computer by the computer executing the program. The program in which the processing details are written can be stored in a computer-readable recording medium (however, excluding carrier waves).

When the program is distributed, it may be sold in the form of a portable storage medium such as a digital versatile disc (DVD) or a compact disc read only memory (CD-ROM) storing the program. The program may be stored in a storage device of a server computer, and the program may be transferred from the server computer to another computer over a network.

A computer executing the program stores the program stored in a portable storage medium or transferred from a server computer in its own storage device. The computer then reads the program from its own storage device, and executes processes according to the program. The computer may directly read the program from a portable storage medium, and execute processes according to the program. Alternatively, the computer may successively execute a process, every time the program is transferred from a server computer, according to the received program.

Although the exemplary embodiments of the present invention have been illustrated in detail, the present invention is not limited to the above-mentioned embodiments, and other embodiments, variations and modifications may be made without departing from the scope of the present invention.

## Claims

1. A non-transitory computer-readable recording medium storing a display program of a screen used to check videos captured by cameras, the display program causing a computer to execute a process, the process comprising:
analyzing each of the videos to identify a time period in which a target subject is captured in each of the videos;
acquiring a reference position to be a reference for tracking the target subject;
referring to a storage unit that stores information about respective positions in which the cameras are installed; and
displaying display fields in order of distances between each of the cameras and the reference position, the display fields corresponding to the cameras, respectively, each of the display fields displaying information about the time period in which the target subject is captured in a video from a corresponding one of the cameras.

2. The non-transitory computer-readable recording medium according to claim 1, wherein a timeline is displayed in each of the display fields, and the time period in which the target subject is captured is displayed in a different manner from other time periods in the timeline.

3. The non-transitory computer-readable recording medium according to claim 1 or 2, wherein when a first time period is selected in a first display field of the display fields, a video captured in the first time period by a camera corresponding to the first display field is displayed.

4. The non-transitory computer-readable recording medium according to any one of claims 1 to 3, wherein the display fields are arranged in a display direction of the display fields in order of distances between the cameras corresponding to respective display fields and the reference position from shortest to longest.

5. The non-transitory computer-readable recording medium according to any one of claims 1 to 4, wherein when information about a target subject to be displayed is selected, information about a time period in which the target subject to be displayed that has been selected is captured is displayed in the display fields.

6. A display method of a screen used to check videos captured by cameras, the display method being implemented by a computer, the display method comprising:
analyzing each of the videos to identify a time period in which a target subject is captured in each of the videos;
acquiring a reference position to be a reference for tracking the target subject;
referring to a storage unit that stores information about respective positions in which the cameras are installed; and
displaying display fields in order of distances between each of the cameras and the reference position, the display fields corresponding to the cameras, respectively, each of the display fields displaying information about the time period in which the target subject is captured in a video from a corresponding one of the cameras.
